# NOUVEAU FASCICULE DE BREVET EUROPEEN

(11) **EP 0 351 259 B2**
(45) Date de publication et mention de la décision concernant l'opposition: **13.01.1999**
(45) Mention de la délivrance du brevet: 02.09.1992
(21) Numéro de dépôt: 89401649.2
(22) Date de dépôt: 13.06.1989
(51) Int. Cl.: G01D 11/28, G01P 1/08

(54) **Appareil indicateur analogique à aiguille lumineuse et indication d'une valeur limite**
Analoganzeiger mit Leuchtzeiger und Grenzindikation
Analogous indicating device with a luminous needle and limit value indication

(30) Priorité: 11.07.1988 FR 8809414
(43) Date de publication de la demande: 17.01.1990
(73) Titulaire: AUTOMOBILES PEUGEOT, 75116 Paris (FR); AUTOMOBILES CITROEN, 92200 Neuilly-sur-Seine (FR)
(72) Inventeur: Rousseau, Michel, F-92400 Courbevoie (FR)
(74) Mandataire: Moncheny, Michel

(56) Documents cités:
- EP-A- 0 190 447
- DE-A- 1 054 755
- DE-A- 2 424 565
- DE-A- 3 215 184
- DE-A- 3 437 164
- DE-U- 1 650 772
- DE-U- 1 749 888
- DE-U- 1 822 718
- US-A- 3 641 967
- US-A- 4 257 084
- PATENT ABSTRACTS OF JAPAN, vol. 10, no. 149 (P-461)[2206], 30 mai 1986; & JP-A-61 3010 (DAIHATSU KOGYO K.K.) 09-01-1986

## Description

La présente invention a pour objet un appareil indicateur analogique du type comportant un cadran et une aiguille lumineuse, indiquant une grandeur, en matériau transmettant la lumière provenant d'une première source de lumière, et un dispositif intégré d'indication d'une valeur limite de la grandeur comprenant des moyens pour faire varier l'intensité et/ou la couleur de l'éclairage de l'aiguille lumineuse, ces moyens comprenant une seconde source de lumière.

L'invention concerne plus particulièrement un indicateur analogique monté sur le tableau de bord d'un véhicule automobile. Ce type d'indicateur utilise couramment une aiguille lumineuse qui se déplace en regard de graduations, et/ou d'autres indices de mesure, formées sur le cadran pour indiquer par exemple la vitesse du véhicule ou le régime du moteur.

Dans ce type d'appareil, la lumière de la source lumineuse est guidée vers l'aiguille qui est transparente ou translucide pour éclairer celle-ci.

Dans certains types d'indicateurs, tels que par exemple celui décrit et représenté dans le document FR-A-2 422 147, le cadran peut être lui-même transparent et les rayons lumineux sont guidés également en direction du cadran. Dans d'autres cas seule l'aiguille est éclairée et un guide de lumière agencé coaxialement, ou sensiblement parallèle, à l'axe d'enchaînement de l'aiguille, est prévu pour permettre l'illumination de cette dernière.

On connaît également des moyens d'indiquer une valeur limite de la grandeur affichée sur de tels indicateurs, par exemple au moyen d'un voyant intégré au tableau de bord ou au cadran et qui s'éclaire lorsque la valeur limite de la grandeur est atteinte. De tels voyants sont naturellement distincts de l'affichage continu de la grandeur analogique au moyen de l'aiguille lumineuse.

Une autre solution pour indiquer qu'une valeur limite est atteinte consiste à inclure l'indication de la zone située au-delà de la valeur limite sur l'affichage du cadran, par exemple au moyen d'un graphisme distinct. Cette solution présente l'inconvénient d'être matérialisée une fois pour toute sur le cadran sans possibilité de modifier ultérieurement la valeur limite choisie.

On connaît du document JP-A-613 010 un appareil indicateur analogique du type comportant un cadran et une aiguille lumineuse, indiquant une grandeur, en matériau transmettant la lumière provenant d'une première source de lumière, et un dispositif intégré d'indication d'une valeur limite de la grandeur.

DE-GM-17 49 888 décrit un appareil de ce type dans lequel le dispositif intégré comprend des moyens pour faire varier l'intensité et/ou la couleur de l'éclairage de l'aiguillage lumineuse, ces moyens comprenant une seconde source de lumière.

DE-C-904 127 décrit un dispositif pour déclencher une alarme par allumage de deux lampes, ne comportant ni cadran ni aiguille.

L'invention a pour but de proposer un appareil du type décrit dans DE-GM-17 49 888 dans lequel la valeur limite puisse être modifiée en fonction d'un second paramètre, par exemple une vitesse limite de déplacement du véhicule en fonction de l'état des pneumatiques.

Dans ce but l'invention propose un appareil du type précité, caractérisé en ce que la valeur limite est variable en fonction de plusieurs paramètres, par exemple le régime d'un moteur de véhicule automobile en fonction de l'état de celui-ci ou la vitesse maximum admissible de déplacement dudit véhicule en fonction, par exemple, de la pression de pneumatiques équipant ce véhicule ou de l'état de la chaussée, et en ce que l'indication selon laquelle la valeur limite de la grandeur indiquée par l'aiguille lumineuse est atteinte est fournie par l'allumage de la seconde source de lumière, cet allumage étant commandé indépendamment de la position de l'aiguille, par un circuit électronique ou par un capteur.

Selon d'autres caractéristiques de l'invention:
- la second source de lumière est d'une couleur différente de celle de la première source de lumière;
- les moyens comportent un filtre de couleur amovible que l'on interpose sur le trajet de la lumière provenant de la première source de lumière lorsque la valeur limite est atteinte ;
- le corps de l'aiguille lumineuse est relié à l'extrémité d'un organe formant guide de lumière coaxial, ou sensiblement parallèle, à l'axe de rotation de l'aiguille tournante, la première source de lumière étant agencée à la base du guide de lumière ;
- dans le cas où les moyens comprennent une seconde source de lumière, cette demière est agencée à la base du guide de lumière à l'opposé de la première source de lumière ; et
- l'appareil est du type comportant un cadran éclairé relié à une source lumineuse, les moyens pour faire varier l'intensité et/ou la couleur de l'édairage de l'aiguille lumineuse modifiant simultanément l'intensité et/ou la couleur de la source lumineuse d'édairage du cadran.

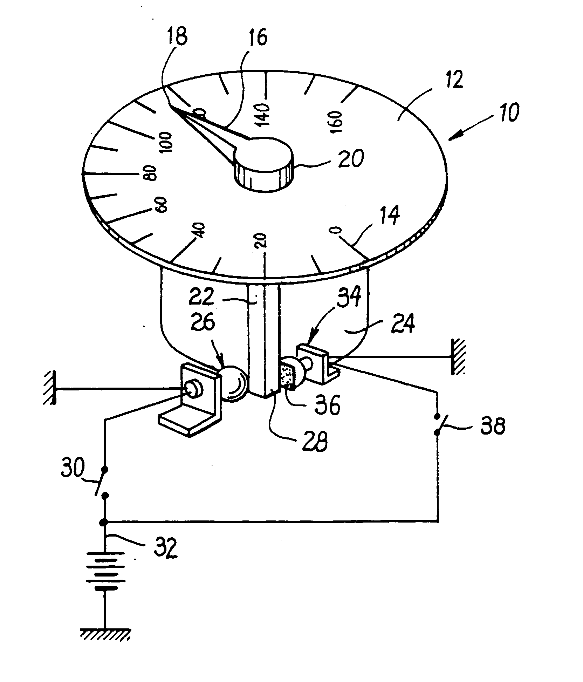

D'autres caractéristiques et avantages de l'invention apparaîtront à la lecture de la description détaillée qui va suivre pour la compréhension de laquelle on se reportera au dessin annexé dont la figure unique représente en perspective et de manière schématique un appareil indicateur analogique réalisé conformément aux enseignements de l'invention.

On a représenté sur la figure un appareil indicateur analogique 10 constitué pour l'essentiel par un cadran 12 prévu pour être monté sur le tableau de bord d'un véhicule automobile et sur lequel sont dessinées des graduations 14 qui, par exemple, indiquent la vitesse de déplacement du véhicule.

L'appareil indicateur 10 comprend une aiguille lumineuse 16 qui est montée toumante autour d'un axe perpendiculaire au cadran 12 de façon que son extrémité 18 se déplace en regard des graduations 14 en fonction de la variation de la vitesse du véhicule.

La base 20 de l'aiguille se prolonge à la face inférieure du cadran 12 par un organe formant guide de lumière 22.

Dans ce mode de réalisation le guide de lumière 22 est un élément parallépipédique dont l'extrémité supérieure, non apparente, est reliée à la base 20 de l'aiguille.

Un dispositif d'entrainement 24, schématisé sur la figure, assure l'entrainement en rotation de l'aiguille lumineuse 16. Une première source de lumière 26, par exemple constituée par une lampe émettant de la lumière blanche, est agencée en vis-à-vis de la base 28 du guide de lumière 22.

Cette première lampe 26 est reliée d'une manière connue au moyen d'un interrupteur 30 à une source de courant 32 du véhicule.

La première source de lumière 26 a pour but d'assurer l'éclairage en lumière blanche de l'aiguille lumineuse 16 dès que l'on met le contact du véhicule automobile ce qui a pour effet de provoquer la fermeture de l'interrupteur 30.

Conformément à l'invention il est prévu une seconde source lumineuse 34 également agencée en vis-à-vis de la base 28 du guide de lumière 22, mais à l'opposé de la première source de lumière 26. Cette seconde source de lumière 34 peut également être constituée par une lampe émettant de la lumière blanche et en face de laquelle est situé un filtre de couleur 36, par exemple rouge. A titre de variante non représentée la seconde lampe 34 peut directement émettre une lumière de couleur rouge.

La seconde source de lumière 34 est reliée à la source de courant 32 par un second interrupteur 38 dont la fermeture est commandée, par exemple lorsqu'une valeur limite de la grandeur analogique indiquée par l'aiguille lumineuse 16 est atteinte.

En fonctionnement normal, seule la première source de lumière 26 est sous tension. Lorsque la valeur limite de la grandeur indiquée par l'aiguille lumineuse 16 dépasse un certain seuil prédéterminé, la seconde source de lumière 34 est mise sous tension au moyen de l'interrupteur 38. Ceci a pour effet de provoquer un changement de couleur de l'aiguille lumineuse 36.

A titre de variante, il est possible de provoquer simultanément l'extinction de la première source de lumière 26 pour accentuer l'effet de contraste perçu par le conducteur.

La commande du second interrupteur 38 peut être assurée par exemple au moyen de tout circuit électronique ou capteur approprié pour foumir l'indication selon laquelle une valeur limite de la grandeur indiquée par l'aiguille lumineuse 16 est atteinte.

L'appareil indicateur qui vient d'être décrit est particulièrement adapté à l'indication de valeurs limites variables en fonction de plusieurs paramètres, par exemple du régime du moteur en fonction de l'état de celui-ci ou de la vitesse maximum admissible de déplacement du véhicule qui peut varier en fonction de nombreux critères tels que par exemple la pression des pneumatiques équipant le véhicule ou l'état de la chaussée.

Le principe de l'invention est également applicable dans le cas où le cadran est également un cadran édairé par une source lumineuse. Dans ce cas, il est possible de prévoir soit un changement de couleur seulement pour l'aiguille lumineuse 16, soit pour l'aiguille lumineuse et le cadran éclairé ceci en fonction de l'agencement des diverses sources de lumière et de la source lumineuse d'éclairage du cadran.

Il est également possible, à titre de variante non représentée, de conserver la même couleur d'éclairage de l'aiguille lumineuse 16 mais d'en faire varier l'intensité de manière très importante.

## Revendications

1. Appareil indicateur analogique (10) du type comportant un cadran (12) et une aiguille lumineuse (16), indiquant une grandeur, en matériau transmettant la lumière provenant d'une première source de lumière (26), et un dispositif intégré d'indication d'une valeur limite de la grandeur comprenant des moyens (34,36) pour faire varier l'intensité et/ou la couleur de l'éclairage de l'aiguille lumineuse (16), ces moyens comprenant une seconde source de lumière (34), **caractérisé en ce que** la valeur limite est variable en fonction de plusieurs paramètres, par exemple le régime d'un moteur de véhicule automobile en fonction de l'état de celui-ci ou la vitesse maximum admissible de déplacement dudit véhicule en fonction, par exemple, de la pression de pneumatiques équipant ce véhicule ou de l'état de la chaussée, et en ce que l'indication selon laquelle la valeur limite de la grandeur indiquée par l'aiguille lumineuse est atteinte est fournie par l'allumage de la seconde source de lumière (34), cet allumage étant commandé indépendamment de la position de l'aiguille (16), par un circuit électronique ou par un capteur.

2. Appareil indicateur selon la revendication 1 caractérisé en ce que la seconde source de lumière (34) est d'une couleur différente (36) de celle de la première source de lumière (26).

3. Appareil indicateur selon la revendication 1 caractérisé en ce que lesdits moyens comportent un filtre de couleur amovible que l'on interpose sur le trajet de la lumière provenant de la première source de lumière lorsque la valeur limite est atteinte.

4. Appareil indicateur selon l'une quelconque des revendications précédentes, caractérisé en ce que le corps de l'aiguille lumineuse (16) est relié à l'extrémité d'un organe (22) formant guide de lumière coaxial, ou sensiblement parallèle, à l'axe de rotation de l'aiguille toumante (16), la première source de lumière (26) étant agencée à la base (28) du guide de lumière (22).

5. Appareil indicateur selon la revendication 4 prise en combinaison avec l'une des revendications 1 ou 2 caractérisé en ce que la seconde source de lumière (34) est agencée à la base (28) du guide de lumière (22) à l'opposé de la première source de lumière (26).

6. Appareil indicateur selon l'une quelconque des revendications précédentes du type comportant un cadran éclairé relié à une source lumineuse, caractérisé en ce que lesdits moyens pour faire varier l'intensité et/ou la couleur de l'éclairage de l'aiguille lumineuse (16) modifient simultanément l'intensité et/ou la couleur de la source d'éclairage du cadran.

## Patentansprüche

1. Analoganzeiger (10) mit einem Ziffernblatt (12) und einem eine Größe anzeigendenden Leuchtzeiger (16) aus einem Werkstoff, der das von einer ersten Lichtquelle (26) kommende Licht überträgt, und einer integrierten Vorrichtung zur Anzeige eines Grenzwerts der Größe, die eine erste Lichtquelle (34) aufweisende Einrichtungen (34, 36) zum Ändern der Stärke und/oder der Farbe der Beleuchtung des Leuchtzeigers (16) aufweist, dadurch gekennzeichnet, daß der Grenzwert in Abhängigkeit von mehreren Parametern veränderlich ist, und zwar beispielsweise die Drehzahl eines Kraftfahrzeugmotors in Abhängigkeit von dessen Zustand oder die zulässige Höchstgeschwindigkeit dieses Fahrzeugs in Abhängigkeit beispielsweise vom Druck der Reifen dieses Fahrzeugs oder vom Straßenzustand, und daß die Anzeige, gemäß welcher der Grenzwert der vom Leuchtzeiger angezeigten Größe erreicht ist, durch die Einschaltung der zweiten Lichtquelle (34) geliefert wird, wobei diese Einschaltung unabhängig von der Stellung des Zeigers (16) durch eine elektronische Schaltung oder durch einen Fühler ausgelöst wird.

2. Anzeiger nach Anspruch 1, dadurch gekennzeichnet, daß die zweite Lichtquelle (34) eine andere Farbe (36) als die erste Lichtquelle (26) hat.

3. Anzeiger nach Anspruch 1, dadurch gekennzeichnet, daß diese Einrichtungen einen lösbaren Farbfilter aufweisen, der in den Weg des von der ersten Lichtquelle kommenden Lichts eingesetzt wird, wenn der Grenzwert erreicht ist.

4. Anzeiger nach einem der vorhergehenden Ansprüche, dadurch gekennzeichnet, daß der Körper des Leuchtzeigers (16) mit dem Ende eines Organs (22) verbunden ist, das einen Lichtleiter bildet, der zur Drehachse des umlaufenden Zeigers (16) koaxial oder im wesentlichen parallel ist, wobei die erste Lichtquelle (26) an der Basis (28) des Lichtleiters (22) angeordnet ist.

5. Anzeiger nach Anspruch 4 in Verbindung mit einem der Ansprüche 1 oder 2, dadurch gekennzeichnet, daß die zweite Lichtquelle (34) an der Basis (28) des Lichtleiters (22) auf der der ersten Lichtquelle (26) entgegengesetzten Seite angeordnet ist.

6. Anzeiger nach einem der vorhergehenden Ansprüche mit einem beleuchteten, mit einer Lichtquelle verbundenen Ziffernblatt, dadurch gekennzeichnet, daß die Einrichtungen zur Änderung der Stärke und/oder der Farbe der Beleuchtung des Leuchtzeigers (16) gleichzeitig die Stärke und/oder die Farbe der das Ziffernblatt beleuchtenden Lichtquelle ändern.

## Claims

1. Analog indicator device (10) of the type comprising a dial (12) and a luminous needle (16), indicating a magnitude, made of a material that can transmit light from a first light source (26), and a built-in device for indicating a limiting value of the magnitude, comprising means (34, 36) for varying the intensity and/or the colour of the illumination of the luminous needle (16), these means comprising a second light source (34), characterized in that the limiting value can be varied in accordance with a number of parameters, for example the engine speed of a motor vehicle as a function of the condition thereof or the maximum permitted speed of travel of the said vehicle as a function, for example, of the pressure in the tyres fitted to this vehicle or of the condition of the roadway, and in that the indication that the limiting value of the magnitude indicated by the luminous needle has been reached is provided by the lighting of the second light source (34), this lighting being controlled independently of the position of the needle (16), by an electronic circuit or by a sensor.

2. Indicator device according to Claim 1, characterized in that the second light source (34) is a different colour (36) from the first light source (26).

3. Indicator device according to Claim 1, characterized in that the said means comprise a removable colour filter which is interposed in the path of the light from the first light source when the limiting value is reached.

4. Indicator device according to any one of the preceding claims, characterized in that the body of the luminous needle (16) is connected to the end of a member (22) which forms a light guide coaxial or substantially parallel to the axis of rotation of the turning needle (16), the first light source (26) being arranged at the base (28) of the light guide (22).

5. Indicator device according to Claim 4 taken in combination with either of Claims 1 and *2,* characterized in that the second light source (34) is arranged at the base (28) of the light guide (22) opposite the first light source (26).

6. Indicator device according to any one of the preceding claims, of the type comprising an illuminated dial connected to a light source, characterized in that the said means for varying the intensity and/or the colour of the illumination of the luminous needle (16) at the same time modify the intensity and/or the colour of the source that illuminates the dial.
